# EUROPEAN PATENT APPLICATION

(11) **EP 4 846 851 A2**
(43) Date of publication of application: **02.12.2026**
(21) Application number: 26201533.2
(22) Date of filing: 29.08.2017
(51) Int. Cl.: A01P 3/00

(54) **SODIUM PHOSPHITE COMBINATIONS**

(30) Priority: 29.08.2016 NL 2017384
(62) Document number(s) of the earlier application(s) in accordance with Art. 76 EPC: 17762236.2 / 3 503 732
(71) Applicant: Ceradis Patent B.V., 6708 PW Wageningen (NL)
(72) Inventor: VAN DER KRIEKEN, Wilhelmus Maria, 6708 PW Wageningen (NL)
(74) Representative: V.O.

(57) **Abstract**

The invention relates to an aqueous suspension comprising a phosphite source at 10-50 % (w/w), a fungicide at 1-50 % (w/w), a sodium source at 1-30 % (w/w), and a surfactant at 0.1-10% (w/w). The invention further relates to methods of producing said aqueous suspension, and to methods employing said aqueous suspension.

## Description

The invention relates to fungicidal compositions comprising sodium phoshite. The invention further relates to methods for producing a composition of the invention and to methods of preventing, reducing and/or eliminating the presence of a pathogen, especially a fungus, on a plant or on one or more plant parts, by applying said composition.

Phosphites, also known as phosphonates, are compounds derived of phosphorous acid, H₃PO₃. In agriculture, phosphites are marketed as fertilizers and/or as fungicides.

Phosphite has been known for its fertilizer properties since at least the 1990s, as is described in U.S. Pat. No. 5,514,200. Prior to this discovery, phosphite was allowed only for use as a fungicide (U.S. Pat. No. 4,075,324) and as a food preservative in the USA. Unlike sulfate and phosphate, phosphite is readily absorbed by the leaves. Because of this, phosphite can be an excellent fertilizer material for use in foliar applications. In addition, phosphite is mobile in the soil and readily moves to the roots to become absorbed by the plant. Because of this, phosphite is an excellent stable, slow release, fertilizer material for use in soil and plant applications.

The activity of phosphites as anti-fungal agent depends in part on a direct toxicity towards oomycetes like *Phytophthora* and *Pythium* and a stimulation of plant defense (Smillie, R., Grant, B.R., Guest, D. (1989). Phytopathology 79: 921-926; Daniel, R., Guest, D. (2006). Physiol. Mol. Plant. Pathol. 67: 194-201).

Phosphites are known as environmental benign fungicides with a low toxicity towards users and consumers. Phosphites have shown low toxicity in rodents after oral administration as well as after dermal administration and inhalatory exposure. No safety concerns are known for operators and bystanders, nor for consumers. Phosphites are neither known as skin sensitizers nor as skin or eye irritants (EFSA J, 2012. 10(12): 2963).

Suitable examples of phosphite containing compounds are phosphorous acid and its (alkali metal or alkaline earth metal) salts such as potassium phosphites e.g. KH2PO3 and K2HPO3, Li2HPO3, sodium phosphites, ammonium phosphites, and (C-C4) alkyl esters of phosphorous acid and their salts such as aluminum ethyl phosphite (fosetyl-AI), calcium ethyl phosphite, magnesium isopropyl phosphite, magnesium isobutyl phosphite, magnesium sec-butyl phosphite and aluminum N-butyl phosphite.

The use of fungicides such as amines is known to cause environmental issues, related to accumulation of fungicides in the soil and water bodies. Many organisms, like earthworms, species of zooplankton and fish are sensitive to fungicides. For this reason, considerable effort is directed towards more efficient fungicidal formulations that allow lower dose rates of fungicides. Thus, there is a need to provide further means and methods that allow a further decrease in the dose rate of fungicides.

It is an object of the present invention to provide a fungicidal composition, preferably a fungicidal suspension, that shows improved efficacy of a fungicidal active ingredient. Upon dilution with water, the suspension should form a stable aqueous composition of the active ingredient. Moreover, the active ingredient should be stable in the concentrate formulation upon prolonged storage or storage at elevated temperatures.

The invention therefore provides an aqueous suspension comprising a phosphite source at 10-50 % (w/w), more preferred 15-25%, more preferred about 20%, as calculated on the basis of the amount of phosphite, a sodium source at 1-30 % (w/w), more preferred 5-25% % (w/w), more preferred 10-20% % (w/w), a further fungicide at 1-50 % (w/w), more preferred at 5-30 %, more preferred at 10-20 % (w/w), and a surfactant at 0.1-10 % (w/w), preferably 1-5 % (w/w). An aqueous suspension according to the invention preferably does not comprise a chelating agent such as EDTA, EDDHA, HEDTA, DTPA, citrate, saccharate, gluconate, glucoheptonate or glycine, and/or salt or hydrate thereof, or preferably not more than 1% of the wet weight of a chelating agent such as EDTA, EDDHA, HEDTA, DTPA, citrate, saccharate, gluconate, glucoheptonate or glycine.

It was surprisingly found that phosphite, when combined with a sodium source, enhances the activity of a further fungicide considerable more than other phosphite salts. The observed enhancement was greater than would have been expected on the basis of the activity of phosphite and of the fungicide alone. In addition, the enhancement was more than was observed for combinations of other phosphite salts such as ammonium phosphite and/or potassium phosphite with the fungicide.

Present phosphite-containing products comprise especially ammonium or potassium phosphites. Reasons not to include sodium, when combined with a phosphite source, are (1) it has a relatively low saturation level, meaning that a stock solution of a crop protection product comprising a sodium salt of phosphite cannot be produced as concentrated as potassium or ammonium salts of phosphite, implying increased storage requirements and higher transportation costs; (2) the atom weight of ammonium is lower than of sodium, meaning that a higher dose rate of phosphites per kg product is obtained with NH₄)₂HPO₃; (3) the ammonium salt of phosphite is less expensive; (4) ammonium and potassium cations are known plant fertilizers, while sodium ions have no apparent function in plants. For reasons (1) - (4), as indicated herein above, present phosphite-containing products comprise potassium or ammonium phosphite.

The improved antifungal effects of a sodium phosphite, preferably Na₂HPO₃, in combination with a further (second) fungicide is unexpected and was not known before because, as is indicated herein above, the usage of phosphite, when combined with a sodium source, was not logical and has hardly been applied in the art.

In addition, it was found that phosphite, when combined with a sodium source, shows little phytotoxicity, alone or in combination with a further fungicide, when compared to other phosphite salts. This has neither been described in the art, and is surprising as sodium ions may induce stress-like symptoms in plant tissue, in contrast to, for example, potassium and ammonium salts of phosphite.Several documents, e.g. WO 02/060248A2, WO04/047540A2 and WO06/136551A1, describe compositions comprising a phosphite salt, However, no data are provided for a sodium phosphite salt in these documents. In addition, the improved effects of a sodium salt of phosphite, such as disodium hydrogen phosphite and monosodium dihydrogen phosphite, when compared to other phosphite salts, was not recorded.

US4849219 describes a spray mixture comprising a phosphite salt, in the presence of absence of a further fungicide. Said spray mixture apparently differs from an aqueous suspension according to the invention as a sodium salt of phosphite had no activity against downy mildew caused by *Plasmopara viticola*, in the absence of a further fungicide.

The term "phosphite", as is used herein, refers to a compound derived from phosphorous acid, H₃PO₃. The term includes phosphorous acid and a phosphonate salt (HPO²₃⁻ or H₂PO¹₃⁻). Said term preferably does not include alkyl esters of phosphorous acid and salts thereof, such as diethyl-phosphite.

Sodium ions have no fertilizer action as plants do not use sodium ions in their molecules. Sodium ions may induce stress-like symptoms in plant tissue similar to heavy metal ions. This induced stress response may be an elicitor type of stress response, meaning that the plant starts its defense mechanism, for example by the production of phytoalexins and pathogenesis-associated proteins.

Without being bound by theory, it is thought that sodium, in contrast to ammonium and to other metals such as calcium and potassium, acts as an elicitor of an immune response in plants, thereby enhancing disease resistance. This effect of sodium becomes evident especially when, in the presence of sodium, phosphite is combined with a fungicide. This combination results in a reduction of the amount of the fungicide for obtaining a required effect on a plant or plant part, when compared to phosphite and a fungicide, in combination with other metals or in combination with ammonium.

In one embodiment, said sodium source is preferably selected from sodium carbonate, sodium hydrogen carbonate, sodium hydroxide, sodium chloride, and sodium acetate. Said sodium source preferably is present at 1-30% (w/w), more preferred 5-25% % (w/w), more preferred 10-20% % (w/w), whereby the weight percentages are based on sodium. The skilled person will appreciate that sodium hydroxide is a preferred sodium source in case phosphorous acid is used as a phosphite source, so as to neutralize the pH of the resultant composition.

Said phosphite source and the sodium source preferably are provided by a single source. Said single source may be a monosodium or disodiumphosphite, preferably a disodium phosphite, preferably disodium hydrogen phosphite. Said single source preferably is present in a composition of the invention at 10-60 % (w/w), more preferred at 20-35 % (w/w), more preferred at about 28-30 % (w/w).

Fungi can cause serious damage in agriculture, resulting in critical losses of yield, quality, and profit. The term fungicide, as is used herein, refers to a biocidal chemical compound that is used to kill fungi or fungal spores. The term "fungicide", as is used herein, does not comprise phosphite or a phosphite salt. Chemicals used to control oomycetes, which are not classified as fungi, are also included under the term "fungicides", as oomycetes use the same mechanisms as fungi to infect plants.

Said fungicide preferably is selected from 2-phenylphenol; 8-hydroxyquinoline sulphate; acibenzolar-5-methyl; actinovate; aldimorph; amidoflumet; ampropylfos; ampropylfos-potassium; andoprim; anilazine; azoxystrobin; benalaxyl; benodanil; benomyl (methyl 1-(butylcarbamoyl) benzimidazol-2-ylcarbamate); benthiavalicarb-isopropyl; benzamacril; benzamacril-isobutyl; bilanafos (2S)-2-amino-4-(hydroxymethylphosphinyl)butanoyl-L-alanyl-L-alanine); binapacryl; biphenyl; blasticidin-S; boscalid; bupirimate; buthiobate; butylamine; calcium polysulphide; capsimycin; captafol; captan (N-(trichloromethylthio)cyclohex-4-ene-1,2-dicarboximide); carbendazim; carboxin; carpropamid; carvone; chinomethionat; chlobenthiazone; chlorfenazole; chloroneb; chlorothalonil; chlozolinate; cis-1-(4-chlorophenyl)-2-(1H-1,2,4-triazol-1-yl)-cycloheptanol; clozylacon; a conazole fungicide such as, for example, (*RS*)-1-(β-allyloxy-2,4-dichlorophenethyl)imidazole (imazalil; Janssen Pharmaceutica NV, Belgium) and N-propyl-N-[2-(2,4,6-trichlorophenoxy)ethyl] imidazole-1-carboxamide (prochloraz); copper, cyflufenamid; cymoxanil; cyprodinil; cyprofuram; Dagger G; debacarb; dichlofluanid; dichlone; dichlorophen; diclocymet; diclomezine; dicloran; diethofencarb; diflumetorim; dimethirimol; dimethomorph; dimoxystrobin; dinocap; diphenylamine; dipyrithione; ditalimfos; dithianon; dodine; drazoxolon; edifenphos; ethaboxam; ethirimol; etridiazole; famoxadone; fenamidone; fenapanil; fenfuram; fenhexamid; fenitropan; fenoxanil; fenpiclonil; fenpropidin; fenpropimorph; ferbam; fluazinam (3-chloro-N-(3-chloro-2,6-dinitro-4-trifluoromethylphenyl)-5-trifluoromethyl-2-pyridinamine); flubenzimine; fludioxonil; flumetover; flumorph; fluoromide; fluoxastrobin; fluxapyroxad, flurprimidol; flusulfamide; flutolanil; fosetyl-A1; fuberidazole; furalaxyl; furametpyr; furcarbanil; furmecyclox; guazatine; hexachlorobenzene; hymexazol; iminoctadine triacetate; iminoctadine tris(albesilate); iodocarb; iprobenfos; iprodione; iprovalicarb; irumamycin; isoprothiolane; isovaledione; kasugamycin; kresoxim-methyl; mancozeb; mandipropamid, maneb; mefenoxam, meferimzone; mepanipyrim; mepronil; metalaxyl; metalaxyl-M; methasulfocarb; methfiroxam; methyl 1-(2,3-dihydro-2,2-dimethyl-1H-inden-1-yl)-1H-imidazole-5-carboxylate; methyl 2-[[[cyclopropyl[(4-methoxyphenyl)imino]methyl]thio]-methyl]-.alph- a.-(methoxymethylene)benzeneacetate; methyl 2-[2-[3-(4-chlorophenyl)-1-methyl-allylideneaminooxymethyl]phenyl]-3-meth-oxyacrylate; metiram; metominostrobin; metrafenone; metsulfovax; mildiomycin; monopotassium carbonate; myclozolin; N-(3-ethyl-3,5,5-trimethylcyclohexyl)-3-formylamino-2-hydroxybenzamide; natamycin ((1R,3S,5R,7R,8E,12R,14E,16E,18E,20E,22R,24S,25R,26S)-22-[(3-amino-3,6-dideoxy-D-mannopyranosyl)oxy]-1,3,26-trihydroxy-12-methyl-10-oxo-6,11,28-trioxatricyclo[22.3.1.05,7]octacosa-8,14,16,18,20-pentaene-25-carboxylic acid), N-(6-methoxy-3-pyridinyl)cyclopropanecarboxamide; N-butyl-8-(1,1-dimethylethyl)-1-oxaspiro[4.5]decan-3-amine; noviflumuron; ofurace; orysastrobin; oxadixyl; oxolinic acid; oxycarboxin; oxyfenthiin; pencycuron; penthiopyrad; phosdiphen; phthalide; picobenzamid; picoxystrobin; piperalin; polyoxins; polyoxorim; procymidone; propamocarb; propanosine; propineb; proquinazid; pyraclostrobin; pyrazophos; pyrimethanil; pyroquilon; pyroxyfur; pyrrolnitrine, quinconazole; quinoxyfen; quintozene; sedaxane (2'-[1,1'-bicycloprop-2-yl]-3-(difluoromethyl)-1-methylpyrazole-4-carboxanilide), silthiofam; tetrathiocarbonate; spiroxamine; sulfur, tecloftalam; tecnazene; tetcyclacis; thiazole fungicide such as, for example, 2-(thiazol-4-yl)benzimidazole (thiabendazole; e.g. the commercial product TECTO^{®} Flowable SC of Syngenta, USA), thicyofen; thifluzamide; thiophanate-methyl; thiram; tiadinil; tioxymid; tolclofos-methyl; tolylfluanid; triazbutil; triazoxide; tricyclamide; tricyclazole; tridemorph; trifloxystrobin; validamycin A; valifenalate, vinclozolin; zineb; ziram; zoxamide; (2S)- N-[2-[4-[[3-(4-chlorophenyl)-2-propynyl]oxy]-3-methoxyphenyl]ethyl]-3-methyl-2-[(methylsulphonyl)amino]butanamide; 1-(1-naphthalenyl)-1H-pyrrole-2,5-dione; 2,3,5,6-tetrachloro-4-(methylsulphonyl)pyridine; 2,4-dihydro-5-methoxy-2-methyl-4-[[[[1-[3-(trifluoromethyl)phenyl]-ethyli- dene]amino]oxy]methyl]phenyl]-3H-1,2,3-triazol-3-one; 2-amino-4-methyl-N-phenyl-5-thiazolecarboxamide; 2-chloro-N-(2,3-dihydro-1,1,3-trimethyl-1H-inden-4-yl)-3-pyridinecarboxam- ide; 3,4,5-trichloro-2,6-pyridinedicarbonitrile; chlorothalonil (2,4,5,6-tetrachloroisophthalonitrile), prothioconazole (2-[2-(1-chlorocyclopropyl)-3-(2-chlorophenyl)-2-hydroxypropyl]-1,2-dihydro-3H-1,2,4-triazole-3-thione), s (3-(difluoromethyl)-1-methyl-N-(3',4',5'-trifluoro[1,1'-biphenyl]-2-yl)-1H-pyrazole-4-carboxamide), azoxystrobin (methyl (2E)-2-(2-{[6-(2-cyanophenoxy)pyrimidin-4-yl]oxy}phenyl)-3-methoxyacrylate), mefentrifluconazole (α-[4-(4-chlorophenoxy)-2-(trifluoromethyl)phenyl]-α-methyl-1H-1,2,4-triazole-1-ethanol), and 3-[(3-bromo-6-fluoro-2-methyl-1H-indol-1-yl)sulphonyl]-N,N-dimethyl-1H-1,- 2,4-triazole-1-sulphonamide).

The term "copper", as is used herein, refers to a range of copper salts and copper complexes with organic molecules, that are widely used as fungicides. Cupper has a broad spectrum of activity against true fungi, oomycetes and bacteria. Resistance against copper fungicides is not known. Copper is most commonly used in fungicides in the form of copper hydroxide (Cu(OH)₂ ), copper oxychloride (CuCl₂·3Cu(OH)₂) and Bordeaux mixture (CuSO₄.3Cu(OH)₂.3CaSO₄), although a number of other salts and copper complexes of organic compounds are on the market now or have been sold in the past.

The term "sulfur", as is used herein, refers to elemental sulfur (S0) such as chemically extracted sulfur, as well as to biosulfur produced by microorganisms. Elemental sulfur is used on large scale against various plant pathogenic fungi, for instance *Venturia inequalis*, the cause of scab on apple and *Uncinula necator*, the cause of powdery mildew on grapevine, but also against mites and insects. It is considered a pesticidal ingredient with a very low impact on the environment, though it can cause skin, eye and lung irritation in users. Sulfur is one of the few compounds which are allowed as pesticide in organic agriculture. Biosulfur stands for biologically extracted sulfur, for example as described in WO2012/053894. This biosulfur has some unique properties, as compared to chemically extracted sulfur such as, for example, by the Claus-process. Most important, biosulfur is more hydrophilic than chemically produced sulfur.

In one embodiment, said further fungicide is cyazofamid. An aqueous suspension comprising disodium hydrogen phosphite and cyazofamid does not comprise 250 g/L of disodium hydrogen phosphite and 25 g/L of cyazofamid. A ratio of disodium hydrogen phosphite and cyazofamid in an aqueous suspension according to the invention preferably is between 20: 1 and 1:1 (w/w), such as 15:1, 12:1, 11:1, 9:1, 8:1 and 5:1 (w/w), with the proviso that said ratio is not 10:1 (w/w).

In one embodiment, said further fungicide preferably is not, and does not comprise, cyazofamide. In a product comprising cyazofamid (25 g/L) and Na₂HPO₃ (250 g/L), the sodium salt of phosphite was chosen because this combination increased the stability of product, when compared to other phosphite salts.

Said fungicide in a suspension according to the invention preferably is active against oomycetes, such as mandipropamid, propamocarb, fluazinam, mancozeb, cymoxanil and/or valifenalate.

Said fungicide preferably is active against *Botrytis*, such as boscalid, natamycin and/or iprodione.

A further preferred fungicide is permitted for use on grapes, such as copper, sulfur, mandipropamid, propamocarb, mancozeb, boskalid, cymoxanil and valifenalate; and/or on potatoes such as mandipropamid, propamocarb, fluazinam, mancozeb, boskalid, cymoxanil, iprodione and valifenalate.

A preferred further fungicide is selected from the group consisting of copper, sulfur, fenpropimorph (cis-4-[(RS)-3-(p-tert-butylfenyl)-2-methylpropyl]-2,6-dimethylmorfoline), chlorothalonil (2,4,5,6-tetrachlorobenzene-1,3-dicarbonitrile), folpet (N- [(trichloromethyl) thio] phthalimide), mandipropamid ((*RS*)-2-(4-chloorfenyl)-N-[3-methoxy-4-(prop-2-ynyloxy) fenethyl]-2-(prop-2-ynyloxy)acetamide), propamocarb (propyl [3-(dimethylamino)propyl]carbamate), fluazinam (3-chloro-N-(3-chloro-2,6-dinitro-4-trifluoromethylphenyl)-5-trifluoromethyl-2-pyridinamine), mefenoxam (metalaxyl M; methyl N-(methoxyacetyl)-N-(2,6-xylyl)-DL-alaninate), mancozeb (a manganese ethylenebis(dithiocarbamate) (polymeric) complex with zinc salt), natamycin, boskalid (2-chloro-N-(4'-chloro[1,1'-biphenyl]-2-yl)nicotinamide), iprodione (3-(3,5-dichlorophenyl)-N-isopropyl-2,4-dioxoimidazolidine-1-carboximide), fluxapyroxad (3-(difluoromethyl)-1-methyl-N-(3',4',5'-trifluoro[1,1'-biphenyl]-2-yl)-1H-pyrazole-4-carboxamide), cymoxanil (2-cyano-N-(ethylcarbamoyl)-2-(methoxyimino)acetamide), and valifenalate (methyl 3-(4-chlorophenyl)-3-{[N-(isopropoxycarbonyl)-L-valyl]amino}propanoate), preferably copper, sulfur, fenpropimorph, folpet, chlorothalonil, propamocarb, fluazinam, mancozeb, natamycin, boskalid, iprodione, fluxapyroxad, cymoxanil, and valifenalate.

A most preferred further fungicide is selected from the group consisting of mandipropamid, and fluazinam.

A composition of the invention may also comprise two or more fungicides such as, for example, mancozeb and chlorothalonil, mancozeb and fenpropimorph, mancozeb and folpet, mancozeb and mandipropamid, mancozeb and propamocarb, mancozeb and fluazinam, mancozeb and mefenoxam, mancozeb and boskalid, mancozeb and iprodione, mancozeb and fluxapyroxad, mancozeb and cymoxanil, mancozeb and valifenalate, mandipropamid and chlorothalonil, mandipropamid and fenpropimorph, mandipropamid and folpet, mandipropamid and propamocarb, mandipropamid and fluazinam, mandipropamid and mefenoxam, mandipropamid and boskalid, mandipropamid and iprodione, mandipropamid and fluxapyroxad, mandipropamid and cymoxanil, propamocarb and chlorothalonil, propamocarb and fenpropimorph, propamocarb and folpet, propamocarb and fluazinam, propamocarb and mefenoxam, propamocarb and boskalid, propamocarb and iprodione, propamocarb and fluxapyroxad, propamocarb and cymoxanil, mefenoxam and chlorothalonil, mefenoxam and fenpropimorph, mefenoxam and folpet, mefenoxam and boskalid, mefenoxam and iprodione, mefenoxam and fluxapyroxad, mefenoxam and cymoxanil, boskalid and chlorothalonil, boskalid and fenpropimorph, boskalid and folpet, boskalid and iprodione, boskalid and fluxapyroxad, boskalid and cymoxanil, iprodione and chlorothalonil, iprodione and fenpropimorph, iprodione and folpet, iprodione and fluxapyroxad, iprodione and cymoxanil, fluxapyroxad and chlorothalonil, fluxapyroxad and fenpropimorph, fluxapyroxad and folpet, fluxapyroxad and cymoxanil, folpet and chlorothalonil, folpet and cymoxanil, copper and chlorothalonil, copper and fenpropimorph, copper and folpet, copper and mandipropamid, copper and propamocarb, copper and fluazinam, copper and mefenoxam, copper and boskalid, copper and iprodione, copper and fluxapyroxad, copper and cymoxanil, copper and valifenalate, copper and sulfur, sulfur and chlorothalonil, sulfur and fenpropimorph, sulfur and folpet, sulfur and mandipropamid, sulfur and propamocarb, sulfur and fluazinam, sulfur and mefenoxam, sulfur and boskalid, sulfur and iprodione, sulfur and fluxapyroxad, sulfur and cymoxanil, sulfur and valifenalate, natamycin and chlorothalonil, natamycin and fenpropimorph, natamycin and folpet, natamycin and mandipropamid, natamycin and propamocarb, natamycin and fluazinam, natamycin and mefenoxam, natamycin and boskalid, natamycin and iprodione, natamycin and fluxapyroxad, natamycin and cymoxanil, natamycin and valifenalate, natamycin and copper, natamycin and sulfur, and fenpropimorph and chlorothalonil.

The term "surfactant" or surface active agent, as is used herein, refers to an agent that lowers the surface tension of a liquid, allowing easier spreading of the liquid. A surfactant may in addition lower the interfacial tension between two liquids.

A preferred surfactant in a suspension according to invention is an alkyl polysaccharide and/or a styrene (meth)acrylic copolymer. It was found by the inventors that a stable aqueous suspension of phosphite, sodium and a fungicide could be obtained in the presence of a combination of an alkyl polysaccharide and a styrene (meth)acrylic copolymer, without a need to select a different set of surfactants for every individual agricultural active ingredient.

The alkyl polysaccharide in a composition according to the invention preferably is a non-ionic polysaccharide derivative of the general formula I,

R1-(OG)n (X)m (I)

wherein R1 is hydrogen or a hydrophobic moiety; G is a saccharide residue, X is a succinic anhydride residue, n is chosen from an average value which is between 1 and 200, as is described in US patent number 5.783.692, which is incorporated herein by reference, and m is chosen from an average value which is between 0 and 200.

R1 is preferably chosen from C1 to C40 branched or linear alkyl groups. More preferably, R1 is chosen from the group comprising C1 to C14 branched or linear alkyl groups and may even more preferably be chosen from C4 to C12 linear alkyl.

In a most preferred alkyl polysaccharide, R1 is a C8-C11 alkylpolysaccharide, or even more preferred a C8-C10 and/or C9-C11 alkylpolysaccharide.

A most preferred alkyl polysaccharide is AL-2559 and/or AL-2575 (Croda Crop Care, Snaith Goole, UK), and the like.

Said styrene (meth)acrylic copolymer preferably comprises one or more monomers selected from the group consisting of acrylamidopropyl methyl sulfonic acid, methallyl sulfonic acid, 3-sulfopropyl acrylate, 3-sulfopropyl methacrylate, hydroxypropyl methacrylate, hydroxypropyl acrylate, hydroxyethyl methacrylate, and/or hydroxyethyl acrylate; and their sodium, potassium, ammonium, monoethanolamine, and triethanolamine salts, the resulting polymer having a minimum number average molecular weight (in amu), of 1,200.

Preferred hydrophobic monomers are selected from vinylaromatic monomers such as styrene monomers and C2-C12-monomers. Preferably, the (meth)acrylic copolymer comprises, in polymerised form, (i) at least one C3-C5 monoethylenically unsaturated carboxylic acid monomer, in particular acrylic acid or methacrylic acid, and (ii) at least one hydrophobic monomer selected from styrene monomers and C2-Cl2 monomers. The weight ratio from acid monomer to hydrophobic monomer is preferably in the range of from 10:1 to 1:3; preferably from 5:1 to 1:2.

The styrene (meth)acrylic copolymer preferably comprises acrylamidopropyl methyl sulfonic acid monomers. A most preferred styrene (meth)acrylic copolymer is Atlox Metasperse^{™} 500 L and/or Atlox Metasperse^{™} 550S (Croda Crop Care, Snaith Goole, UK), and the like.

A preferred suspension according to the invention comprises Na₂HPO₃ (10-50% w/w), a fungicide, preferably one or more fungicides selected from the group consisting of copper, sulfur, fenpropimorph, folpet, chlorothalonil, mandipropamid, propamocarb, fluazinam, mefenoxam, fluxapyroxad, mancozeb, boskalid, natamycin, cymoxanil, iprodione and valifenalate (1-50% w/w), MetaSperse 550S (0.2-1.5 % w/w) and AL2575 (1-5 % w/w).

Typical examples of a composition according to the invention are 250 g/l mandipropamid, 375 g/l Na₂HPO₃, 5.25 g/l of a styrene (meth)acrylic copolymer, and 25 g/l of a alkyl polysaccharide; 250 g/l propamocarb, 375 g/l Na₂HPO₃, 5.5 g/l of a styrene (meth)acrylic copolymer, and 25 g/l of a alkyl polysaccharide; 250 g/l fluazinam, 375 g/l Na2HPO3, 7 g/l of a styrene (meth)acrylic copolymer, and 30 g/l of a alkyl polysaccharide; 200 g/l mefenoxam, 400 g/l Na2HPO3, 10 g/l of a styrene (meth)acrylic copolymer, and 30 g/l of a alkyl polysaccharide; 150 g/l fluxapyroxad, 375 g/l Na2HPO3, 7.5 g/l of a styrene (meth)acrylic copolymer, and 30 g/l of a alkyl polysaccharide, 300 g/l mancozeb, 500 g/l Na2HPO3, 5 g/l of a styrene (meth)acrylic copolymer, and 30 g/l of a alkyl polysaccharide, 200 g/l boscalid, 375 g/l Na2HPO3, 5.25 g/l of a styrene (meth)acrylic copolymer, and 25 g/l of a alkyl polysaccharide; 100 g/l cymoxanil, 375 g/l Na2HPO3, 5.5 g/l of a styrene (meth)acrylic copolymer, and 25 g/l of a alkyl polysaccharide, 250 g/l iprodione, 375 g/l Na2HPO3, 7 g/l of a styrene (meth)acrylic copolymer, and 30 g/l of a alkyl polysaccharide; 100 g/l valifenalate, 400 g/l Na2HPO3, 10 g/l of a styrene (meth)acrylic copolymer, and 30 g/l of a alkyl polysaccharide.

An aqueous suspension according to the invention is preferably crushed, preferably by milling, to an average particle size of between 0.2 and 10 micrometer, preferably to an average particle size of between 0.5 and 5 micrometer. Methods for determining the average particle size of a suspension are known to the skilled person. For example, Hukkanen and Braatz, 2003. Sensors and Actuators B 96: 451-459, discuss varies methods that can be used for determining the average particle size of a suspension, including forward light scattering and ultrasonic extinction. A preferred method is based on laser diffraction analysis, for example using a Analysette 22-MicroTec plus laser-particle-sizer (Fritsch, Idar-Oberstein, Germany).

The invention further provides a method of producing an aqueous suspension, said method comprising providing a 20-90 % (w/w) aqueous solution of a phosphite source, adding 2-40% (w/w) of a sodium source, adding 2-50 % (w/w) of a fungicide, and adding 0.1-10 % (w/w) of a surfactant, thereby producing an aqueous suspension comprising a phosphite source at 10-50 % (w/w), a fungicide at 1-50% (w/w), a sodium source at 1-30% , and a surfactant at 0.1-10% (w/w).

Said method of producing an aqueous suspension preferably further comprises crushing the resulting suspension to an average particle size of between 0.2 and 10 micrometer, preferably to an average particle size of between 0.5 and 5 micrometer. Small particle sizes are preferred for many applications. Smaller particles will more easily distribute on or in a product resulting in a much better efficacy in combatting fungi. Said crushing of the suspension is preferably performed by milling, for example in a bead mill such as Dynomill^{®}.

The invention further provides a method of protecting an agricultural plant or plant part against a fungus, comprising applying to said agricultural plant or to said plant part the suspension according to the invention.

Prior to use, a composition according to the invention is preferably dissolved or dispersed in water or diluted with water to contain between 0,001 and 5 w/v% of the fungicide. If required, a sticking agent may be added to the diluted aqueous suspension. Said diluted aqueous composition is used, for example, to control *Botrytis* and downy mildew infections of apples, gooseberries, hops, ornamentals, grapes, peaches, strawberries, soy bean, and sugar beets, scab, including common scab, apple scab, black scab on potatoes, pear scab, and powdery scab, brown rot of peaches, gall mite on blackcurrant, peanut leafspot, mildew on roses, and mites on beans, carrots, lucerne, melons, and tomatoes. For this, the aqueous composition is preferably sprayed over a plant, or part thereof.

Alternatively, a plant of part thereof is coated with a diluted aqueous composition comprising a suspension according to the invention by submerging the plant or part thereof in the diluted aqueous composition to protect the plant of part thereof against a fungus. A preferred part of a plant that is coated with a suspension according to the invention, or with a dilution thereof, is seed. A further preferred part of a plant that is coated with a suspension according to the invention, or with a dilution thereof, is a fruit such as, for example, a citrus fruit such as orange, mandarin and lime, a pome fruit such as apple and pear, a stone fruit such as almond, apricot, cherry, damson, nectarine, tomato and watermelon; a tropical fruit such as banana, mango, lychee and tangerine. A preferred fruit is a citrus fruit, such as orange.

A further preferred part that is coated with a suspension according to the invention, or with a dilution thereof, is a post-harvest fruit, such as a citrus fruit such as orange, mandarin and lime, a pome fruit such as apple and pear, a stone fruit such as almond, apricot, cherry, damson, nectarine, tomato and watermelon; a tropical fruits such as banana, mango, lychee and tangerine. A preferred post-harvest fruit is a citrus fruit, such as orange, and a tropical fruit such as banana.

The invention further provides a method of preventing, reducing and/or eliminating the presence of a fungus on a plant or on one or more plant parts, comprising applying to said plant or plant part a suspension according to the invention, or a dilution thereof. A preferred plant part according to the invention is selected from seed, stem, leaf and fruit such as, for example, a citrus fruit such as orange, mandarin and lime, a pome fruit such as apple and pear, a stone fruit such as almond, apricot, cherry, nectarine; a tropical fruit such as mango, lychee and tangerine. A preferred fruit is a citrus fruit, such as orange. A most preferred part is a post-harvest fruit.

A preferred plant part comprises seed, stem, leaf or fruit, preferably a post-harvest fruit.

The invention further provides a method for treatment of a soil comprising providing the aqueous suspension according to the invention, or a dilution thereof, and adding the suspension to the soil.

The aqueous suspension, or dilution thereof, can be added directly to the soil according to any method known in the art e.g. by spraying it on the soil, mixing it through the soil, by applying it to a furrow in a soil, or by dipping the soil, or compounds which will be added to the soil, in the aqueous suspension or dilution thereof. In addition, the aqueous suspension, or dilution thereof, may also be added to an ingredient or to any composition that is applied to the soil, such as a fertilizer, a nutrient composition and an agent against other unwanted organisms such as insects, nematodes and/or mites.

An aqueous suspension, or dilution thereof, may be applied at any suitable moment which of course will differ per crop and growth condition such as the climate. It can e.g. be added to the soil before seeding or planting; before, during and/or after growth of the crop; and at different seasons such as before during and after the spring, summer, autumn and/ or winter.

The aqueous suspension according to the invention, or dilution thereof, can be applied to an agricultural product such as a plant by spraying. Other methods suitable for applying the aqueous composition, or dilution thereof, in liquid form to the products are also a part of the present invention. These include, but are not limited to, dipping, watering, drenching, introduction into a dump tank, vaporizing, atomizing, fogging, fumigating, painting, brushing, misting, dusting, foaming, spreading-on, packaging and coating {e.g. by means of wax or electrostatically).

In addition, the aqueous suspension, or dilution thereof, may also be injected into the soil. Spraying applications using automatic systems are known to reduce the labor costs and are cost-effective. Methods and equipment well-known to a person skilled in the art can be used for that purpose. The aqueous suspension, or dilution thereof, can be regularly sprayed, when the risk of infection is high. When the risk of infection is lower spray intervals may be longer.

An aqueous suspension, or dilution thereof, can also be used for treatment of soil. The suspension, or dilution thereof, can be applied in/on any soil applied outside or inside such as in greenhouses. Said soil can be used for the production of any agricultural or horticultural product herein to be understood in a very broad sense and includes, but is not limited to, edible crops such as cereals, vegetables, fruit, nuts/beans/seeds, herbs/spices and mushrooms; industrial crops; crops grown for feed; ornamental crops such as plants, flowers, bushes and trees.

Preferred examples of cereals are wheat, rice, oats, barley and maize. Preferred examples of vegetables are lettuce, beans, peas, cabbage, carrots, onions, potatoes, seed-potatoes, tomatoes, peppers, cucumbers, asparagus, paprika, egg plants and pumpkins. Preferred examples of fruit are apples, pears, cherries, peaches, apricots, plums, bananas, grapes, pineapples, papayas, mangos, kiwis, melons, oranges, grapefruits, lemons, mandarins, limes, strawberries, blackberries, currants, lychees, olives and avocados. Preferred examples of nuts, beans and seeds are peanuts, ground-nuts, almonds, cashew nuts, pistachio nuts, coconuts, coffee, cocoa, sunflowers and rapeseed. Preferred examples of industrial crops are sorghum, soya, palm oil, sugar beets, sugarcane, cotton, jute, tobacco, hops, rubber plants and tea.

A preferred soil is a growth substrate for mushrooms. In case of mushroom cultivation an aqueous suspension of the invention, or dilution thereof, can be mixed through the soil (e.g. compost) or sprayed on the soil and/or top-layer (e.g. the casing) at any stage of the production process of the soil and/or at any stage of the mushroom growth cycle such as: before during or after fermentation of the compost; after spawing; after casing; together with one or more of the watering steps; before, during and after pinning; after harvesting the first and/or second harvest; or any combination of the above mentioned stages. An aqueous suspension can also be added to the spawn, the gypsum, the nutrient supplements and other additives usually applied in mushroom cultivation, or to any substance which is part of the mushroom growth substrate.

Preferred examples of mushrooms are edible mushrooms and mushrooms grown for pharmaceutical or industrial purposes. Examples of edible mushrooms are *Agaricus bisporus* (regular mushroom), *Pleurotus ostreatus* (oyster mushroom), *Lentinus edotus* (Shiitake mushroom), *Pholiota aegerita* (Poplar mushroom) and *Lepista nuda* (Blue stalk mushroom).

Described herein are the following Items:
Item 1. An aqueous suspension comprising a phosphite source at 10-50 % (w/w), a fungicide at 1-50 % (w/w), a sodium source at 1-30 % (w/w), and a surfactant at 0.1-10 % (w/w).
Item 2. The suspension according to Item 1, wherein the phosphite source and the sodium source are provided by a single source, preferably by disodium hydrogen phosphite.
Item 3. The suspension according to Item 1 or Item 2, wherein the fungicide is selected from the group consisting of copper, sulfur, fenpropimorph, chlorothalonil, folpet, mandipropamid, propamocarb, fluazinam, mancozeb, natamycin, boskalid, iprodione, fluxapyroxad, cymoxanil, and valifenalate.
Item 4. The suspension according to any one of Items 1-3, wherein the surfactant is a combination of an alkyl polysaccharide and a styrene (meth)acrylic copolymer.
Item 5. The suspension according to any one of Items 1-4, comprising 250 g/l mandipropamid, 375 g/l Na2HPO3, 5.25 g/l of a styrene (meth)acrylic copolymer, and 25 g/l of a alkyl polysaccharide, or 250 g/l fluazinam, 375 g/l Na2HPO3, 7 g/l of a styrene (meth)acrylic copolymer, and 30 g/l of a alkyl polysaccharide.
Item 6. The suspension according to any one of Items 1-5, wherein the particles have an average particle size of between 0.2 and 10 micrometer, preferably between 0.5 and 5 micrometer
Item 7. A method of producing an aqueous suspension, said method comprising
   - providing a 10-50 % (w/w) aqueous solution of a phosphite source,
   - adding a sodium source,
   - adding 1-50 % (w/w) of a fungicide, and
   - adding 0.1-10 % (w/w) of a surfactant.
Item 8. A method of producing an aqueous suspension according to Item 7, further comprising crushing, preferably milling, the resulting suspension to an average particle size of between 0.2 and 10 micrometer, preferably to an average particle size of between 0.5 and 5 micrometer.
Item 9. A method of protecting an agricultural plant or plant part against a pathogen, preferably against a fungus, comprising applying to said agricultural plant or to said plant part the suspension according to any one of Items 1-6.
Item 10. A method of preventing, reducing and/or eliminating the presence of a pathogen, preferably a fungus, on a plant or on one or more plant parts, comprising applying to said plant or to said one or more plant parts the suspension according to any one of Items 1-6.
Item 11. The method of any one of Items 9-10, wherein the plant part comprises seed, stem, leaf or fruit.
Item 12. The method of any one of Items 9-11, wherein the plant part is a post-harvest fruit.
Item 13. A method for treatment of a soil comprising
   a) providing the suspension according to any one of Items 1-6; and
   b) adding the suspension to the soil.
Item 14. The method of Item 13, wherein the soil is a growth substrate for mushrooms.
Item 15. The method according to any one of Items 9-14, wherein the suspension is diluted with an aqueous liquid, prior to application to a soil, plant or plant part.

For the purpose of clarity and a concise description, features are described herein as part of the same or separate aspects and preferred embodiments thereof, however, it will be appreciated that the scope of the invention may include embodiments having combinations of all or some of the features described.

The invention will now be illustrated by the following examples, which are provided by way of illustration and not of limitation and it will be understood that many variations in the methods described and the amounts indicated can be made without departing from the spirit of the invention and the scope of the appended claims.

### Examples

### Example 1

### Material and Methods

### Materials and methods

Tested fruit: apple cv Elstar and a banana (cv Cavendish) from organic origin/SKAL certified. SKAL is a semi-governmental Dutch organization that controls organic production in the Netherlands.

Tested formulation: final concentration of 0 (control), 500, 1000 ppm and 2000 ppm Na₂HPO₃ , K₂HPO₃ or (NH₄)₂HPO₃ combined with 0 (control), 1/16, 1/8, 1/4, 1/2 of the concentration of mandipropamid in the product Revus^{®} (Syngenta, Basel, Switzerland).

Used pathogen: *Botrytis cinerea* spore-suspension containing ~3x10⁵ propagules (spores)/ml.

Application: Fruit peel was damaged with a cork borer, depth ~0,5 cm into the fruit, 2 wounds per apple fruit; 2 wounds per banana fruit. 30 microliter of a freshly prepared spore suspension of *B. cinerea* (estimated 3x10⁵ spores/ml) were applied by pipette onto each wound. Subsequently, the spore-suspension was allowed to air-dry for 3 hours. 50 microliter of fungicide suspensions 1-6 were applied by pipette to each wound.

All fruits were kept at room temperature (20 °C).

Replicates: All treatments (1-6) were performed on 6 individual apples and 6 individual bananas with 2 wounds each resulting in 12 wounds per fruit per treatment. The recorded observed antifungal activity is the reduction (in percentages) of the average surface of the rot as observed in the 12 wounds compared to the rot surface of the untreated control.

Observation: All wounds were inspected daily for visual symptoms of fruit rot and/or fungus growth. Rot surface was determined after 5 and 7 days (see table 1, 2 and 3). The recorded observed antifungal activity is the surface of the rot.

### Determination of synergy

The Colby equation (Colby, 1967. Weeds 15: 20-22) calculates the expected antifungal activity (E in %) of a combination comprising more than one active ingredients: $E = X + Y - \left[\left(X⋅Y\right)/100\right]$ wherein X and Y are the observed antifungal activities (in %) of the individual active ingredients x and y, respectively. If the observed antifungal activity (O in %) of the combination exceeds the expected antifungal activity (E in %) of the combination and the synergy factor O/E is thus > 1.0, the combined application of the active ingredients leads to a synergistic antifungal effect.

In the following tables, it is stated which phosphite salt shows a synergistic effect in combination with a second fungicide that was combined with the phosphite salts.

### Experiments

Effect of Na₂HPO₃, K₂HPO₃ and (NH₄)₂HPO₃ alone and in combination with mandipropamid on fungicidal attack of *Botrytis* on apple and banana. Results are shown in Table 1. Different results are indicated by different letters.

**Table 1**

| Phosphonate | Combination fungicide | | | | |
|---|---|---|---|---|---|
| | mandipropamid (part of label concentration) | | | | |
| **Na₂HPO₃** | control | 1/16 label | 1/8 label | ¼ label | ½ label |
| Control | e | e | e | e | d |
| Concentration 1 | d | d | d | c | b |
| Concentration 2 | c | c | b | b | a |
| Concentration 3 | b | b | b | a | a |
| | | | | | |

| **K₂HPO₃** | control | 1/16 label | 1/8 label | ¼ label | ½ label |
|---|---|---|---|---|---|
| Control | e | e | e | e | d |
| Concentration 1 | d | d | d | d | d |
| Concentration 2 | c | c | c | c | c |
| Concentration 3 | b | b | b | b | b |
| | | | | | |

| **(NH₄)₂HPO₃** | control | 1/16 label | 1/8 label | ¼ label | ½ label |
|---|---|---|---|---|---|
| Control | e | e | e | e | d |
| Concentration 1 | d | d | d | d | d |
| Concentration 2 | c | c | c | c | c |
| Concentration 3 | b | b | b | b | b |

Example 2: Effect of Na₂HPO₃, K₂HPO₃ and (NH₄)₂HPO₃ alone and in combination with mefenoxam on fungicidal attack of *Botrytis* on apple and banana. Results are shown in Table 2. Different results are indicated by different letters.

**Table 2**

| Phosphonate | Combination fungicide mefenoxam (part of label concentration) | |
|---|---|---|
| | | |

| **Na₂HPO₃** | control | ¼ label |
|---|---|---|
| Control | e | e |
| Concentration 2 | c | b |
| | | |

| **K₂HPO₃** | control | ¼ label |
|---|---|---|
| Control | e | e |
| Concentration 2 | c | c |
| | | |

| **(NH₄)₂HPO₃** | control | ¼ label |
|---|---|---|
| Control | e | e |
| Concentration 2 | c | c |

Example 3. Effect of Na₂HPO₃ and NaH₂PO₃ alone, or in combination with mandipropamid, on fungicidal attack of *Botrytis* on apple and banana. Results are shown in Table 3. Different results are indicated by different letters.

**Table 3**

| Phosphonate | Combination fungicide | | |
|---|---|---|---|
| **Na₂HPO₃** | mandipropamid | | |
| | control | 1/8 label | ¼ label |
| Control | e | e | d |
| Concentration 1 | d | c | b |
| Concentration 2 | c | b | a |
| Concentration 3 | b | a | a |

| **NaH₂PO₃** | mandipropamid | | |
|---|---|---|---|
| | control | ¼ label | ½ label |
| Control | e | e | d |
| Concentration 1 | d | d | c |
| Concentration 2 | c | c | b |
| Concentration 3 | b | b | a |

**Example 4.** Effect of Na₂HPO_{3,} K₂HPO₃ and NH₄HPO_{3,} in combination with natamycin, against *Penicillium* on apples

This example demonstrates the increased antifungal effect of disodium phosphite and natamycin against *Penicillium* on apples, when compared to other phosphite salts.

### Materials and methods

Tested fruit: apples cv Gala from organic origin/SKAL certified. SKAL is a semi-governmental Dutch organization that controls organic production in the Netherlands. Wounds of the apples were checked at day 3. All phosphite concentrations were tested at a concentration of 16 mM of phosphonate. Natamycin (95%, Freda) solo and in combination was tested at a concentration of 100 ppm.

### Tested treatments:

1) Control without fungal infection
2) Untreated control
3) Na₂HPO₃
4) K₂HPO₃
5) (NH₄)₂HPO₃
6) Natamycin
7) Na₂HPO₃ and natamycin
8) K₂HPO₃ and natamycin
9) (NH₄)₂HPO₃ and natamycin

Used pathogen: *Penicillium discolor* spore-suspension containing 4*10E6 spores/ml.

Application: The fruit peel of the apple was damaged with a cork borer, ø 4 mm and depth ~0,5 cm into the fruit, with 2 wounds per apple. 40 microliter of a freshly prepared spore suspension of *P. discolor* was applied by pipette onto each wound. Subsequently, the spore-suspension was allowed to air-dry for 4 hours. Then, 50 microliter of a treatment as presented in the list above was applied by pipette to each wound.

All fruits were kept at room temperature (20 °C). Wounds of the apples were checked after 4, 7 and 9 days of incubation. The efficacy is calculated by measuring the surface area (square mm) of the rot on the apples, and compared to the untreated control (see Table 4).

Replicates: All treatments for the apple experiment were performed on six individual apples with two wounds each resulting in 12 wounds per treatment.

### Results

The results of these experiments are depicted in Table 4.

**Table 4.**

| Treatment | Day 4 Efficacy (%) | Day 7 Efficacy (%) | Day 9 Efficacy (%) |
|---|---|---|---|
| Control without infection | NA | NA | NA |
| Untreated control | 0 | 0 | 0 |
| Na₂HPO₃ | 88 | 74 | 64 |
| K₂HPO₃ | 59 | 27 | 22 |
| (NH₄)₂HPO₃ | 71 | 60 | 55 |
| Natamycin | 23 | 10 | 9 |
| Na₂HPO₃ and natamycin | 100 | 71 | 71 |
| K₂HPO₃ and natamycin | 86 | 64 | 55 |
| (NH₄)₂HPO₃ and natamycin | 77 | 48 | 38 |

| | | | |
|---|---|---|---|
| NA: not applicable | | | |

From these results, it is clear that, at equimolar phosphite concentrations, disodium phosphite increases the fungal efficacy of natamycin the best at all time points.

**Example 5.** Effects of Na₂HPO₃ and (NH₄)₂HPO_{3,} in combination with mandipropamid, against downy mildew on grapevine plants

This example demonstrates the increased antifungal effect of disodium phosphite and mandipropamid against downy mildew on grapevine plants, when compared to other phosphite salts.

### Material and methods

The trial was conducted with young plants of grapevine cultivar MERLOT in a greenhouse.

### Tested treatments:

1) Untreated control; not infected
2) Untreated control; infected
3) Na₂HPO₃ Low
4) Na₂HPO₃ High
5) (NH₄)₂HPO₃ Low
6) (NH₄)₂HPO₃ High
7) Revus (250 g/l mandipropamid; Syngenta)
8) Revus and Na₂HPO₃ Low
9) Revus and Na₂HPO₃ High
10) Revus and (NH₄)₂HPO₃ Low
11) Revus and (NH₄)₂HPO₃ High

Treatments were applied twice, once when 3 a 4 leaves were unfolded and the second application 10 days later. Each treatment had 4 plots as replications. The experimental set up was completely randomized and each plot had 3 plants. Inoculation of the plants with the pathogen *Plasmopara viticola* was performed 4 days after the second application. The suspension of the spores in water was prepared at the concentration of 20 000 to 40 000 spores/ml. All foliage ware inoculated. The different phosphites were applied at the same molar concentration of phosphite. With the high phosphite treatments, a concentration of 1.50 l of a 2M solution /100 l was used and with the low phosphite treatment a concentration of 0.75 l of a 2M solution /100 l. Revus was used with a standard concentration of 0.015 liter/100 liter. An assessment on incidence and severity was performed 21 and 28 days after the second application. Efficacy was calculated for severity in comparison to untreated control infected.

### Results

The results of these experiments are depicted in Table 5.

**Table 5. Incidence, severity and efficacy on day 21 and 28 after two treatment applications of the different phosphites, Revus and combination treatments against Downy mildew on grapevine plants**

| Treatment | Incidence | | Severity | | Efficacy | |
|---|---|---|---|---|---|---|
| | Day 21 | Day 28 | Day 21 | Day 28 | Day 21 | Day 28 |
| 1 | 0.8 | 0 | 0 | 0 | 99.2 | 100 |
| 2 | 52.5 | 89.2 | 9.3 | 15.9 | 0 | 0 |
| 3 | 10.8 | 23.3 | 0.8 | 1.6 | 90.4 | 90.2 |
| 4 | 10 | 39.2 | 0.7 | 2.5 | 93.3 | 83.1 |
| 5 | 16.7 | 39.2 | 1.1 | 2.6 | 85.6 | 83.4 |
| 6 | 11.7 | 22.5 | 0.8 | 2 | 92.5 | 86.5 |
| 7 | 25.8 | 55.8 | 2.2 | 5.3 | 66 | 63 |
| 8 | 5.8 | 9.2 | 0.3 | 0.5 | 96.6 | 96.9 |
| 9 | 5.8 | 12.5 | 0.4 | 1.1 | 95.1 | 93.8 |
| 10 | 8.3 | 40.8 | 0.7 | 3.4 | 88.6 | 74.7 |
| 11 | 26.7 | 65.8 | 2.2 | 6.7 | 76.1 | 59.6 |

From these results, it is clear that disodium phosphite increases the fungal efficacy of Revus the best.

**Example 6**. Effects of Na2HPO3 and K2HPO3, in combination with Dithane Neotec (Mancozeb), against downy mildew on grapevine plants

This example demonstrates the increased antifungal effect of disodium phosphite and mancozeb against downy mildew on grapevine plants, when compared to other phosphite salts.

### Material and methods

Similar to example 5, with the following amendments: Mancozeb (Dithane^{®} Neotec; Syngenta) at a dose rate of 0.05 kg/100 liter water was used instead of Revus. One concentration of Na₂HPO₃ and of K₂HPO₃ (1.50 l of a 2M solution /100 l) was applied, no (NH₄)₂HPO₃. One measurement was performed at 21 days after the second application.

### Result

The results of these experiments are depicted in Table 6.

Table 6. Incidence 21 days after the second treatment application for the different phosphites, Dithane Neotec and combination treatments against Downy mildew on grapevine plants.

| Treatment | Incidence |
|---|---|
| Untreated control art. Inf. | 52.5 |
| Untreated control no art. Inf. | 0.8 |
| Na₂HPO₃ | 10.0 |
| K₂HPO₃ | 5.0 |
| Dithane Neotec | 3.3 |
| Dithane Neotec and Na₂HPO₃ | 1.7 |
| Dithane Neotec and K₂HPO₃ | 2.5 |

From these results, it is clear that disodium phosphite increases the fungal efficacy of Dithane Neotec the best.

**Example 7**. Effects of Na2HPO3, K2HPO3 and (NH4)2PO3 in combination with sulfur, against powdery mildew on tomato leaves.

This example demonstrates the increased antifungal effect of disodium phosphite and sulfur against powdery mildew on tomato leaves, when compared to other phosphite salts.

### Materials and methods

Leaves were taken from 5 a 6 week old tomato plant. Per treatment 5 ml was sprayed over 5 leaves and dried for 1 h. Circular disks were punched from the treated leaves with a diameter of 11 mm. 5 disks per treatment were put on water agar in 90 mm ø petri dishes. Water agar was made by sterilizing agar-agar (5 g/L, Carl Roth), benzimidazole (30 mg/L, Sigma-Aldrich) and antibiotic tetracycline hydrochloride (25 mg/L, Carl Roth) in water. Disks were infected by brushing powdery mildew spores from an infected leave until disks were visually covered by spores. After 10 days the surface area covered by powdery mildew was measured by putting pictures of the disks through an online image analyzer. Efficacy was calculated by comparing the treatments against the untreated control. Replicates: 20 disks were used per treatment.

All phosphite concentrations were tested at a concentration of 16 mM of phosphite. Formulated sulfur was applied at a dose of 0.5 g sulfur per liter.

Formulated sulfur consists of the following elements: Sulfur ± 50% (w/w); Anionic surfactant < 3%; Non-ionic surfactant < 3%; Water ± 44%.

### Tested treatments:

1) Control without fungal infection
2) Untreated control
3) Na₂HPO₃
4) K₂HPO₃
5) (NH₄)₂PO₃
6) Formulated sulfur
7) Na₂HPO₃ and formulated sulfur
8) K₂HPO₃ and formulated sulfur
9) (NH₄)₂PO₃ and formulated sulfur

### Results

The results of these experiments are depicted in Table 7.

**Table 7. Surface area and difference compared to formulated sulfur for the different phosphites, sulfur and combination treatments against powdery mildew on tomato leaves.**

| Treatment | Surface area (%) | Increase/decrease compared to surface area of formulated sulfur |
|---|---|---|
| Untreated control | 86.10 | |
| Na₂HPO₃ | 51.20 | |
| K₂HPO₃ | 58.68 | |
| (NH₄)₂PO₃ | 66.32 | |
| Formulated sulfur | 2.15 | 0 |
| Na₂HPO₃ and formulated sulfur | 2.02 | **-**6% |
| K₂HPO₃ and formulated sulfur | 3.4 | +58% |
| (NH₄)₂PO₃ and formulated sulfur | 4.53 | +110% |

From these results, it is clear that disodium phosphite increases the fungal efficacy of sulphur the best.

**Example 8:** Effect of Na₂HPO₃, K₂HPO₃ and (NH₄)₂HPO₃, in combination with Volley^{®} 88 OL against black sigatoka on banana plants.

This example demonstrates the increased antifungal effect of disodium phosphite and Volley (fenpropimorph; cis-4-[(RS)-3-(p-tert-butylfenyl)-2-methylpropyl]-2,6-dimethylmorfoline; BASF) against black sigatoka on banana plants, when compared to other phosphite salts.

### Materials and methods

A single leaf test was established in a research station located in the community of "Anita Grande", county of Jiménez, province of Limón, Costa Rica (latitude 10°15'14.15"N, longitude 83°44'20.29" W).

Every treatment was established in individual plants. Treatments were applied to leaf number 1 to determine their effect as preventive. Leaf position is counted from top to bottom, whereby leaf number 1 is closest to the unfolded leaf. Treatments were distributed systematically to facilitate their location in the field.

Product applications were done in an area of 10 x 10 cm, with a special equipment designed to simulate aerial applications. Application was done at 35 pound-force per square inch. Since weather conditions were highly conducive for disease development, and inoculum density was very high, no artificial inoculation was done. All treatments were applied to the same position on the leaf to minimize experimental error. All treatments were applied at the equivalent volume of 25 L ha⁻¹, as it is done commercially. A total of 3 sprays were applied, application A at Day 0, application B at 7 days after application A (DAA), and application C at day 13 DAA. Volley^{®} 88 OL was sprayed a 0 5.525 L/ha and the different phosphites were applied at the same PO₃ concentration of 2 mol/l and were sprayed at 3 liter/ha.

Mixture of products was done with an electric stirrer (Dewalt^{®} General Purpose, model DW9107), equipped with a standard propel.

For the evaluation of the efficacy, the diseased area that was affected in the 10 x 10 cm leaf area was recorded. Evaluation were done 23, 30 and 36 DAA. Efficacy was calculated by comparing the treatments against the untreated control.

### Results

Results are depicted in Table 8.

**Table 8. Area infected (%) and efficacy on 23, 30 and 36 DAA for the different phosphites, Volley and combination treatments against black sigatoka on banana plants.**

| Treatment | 23 DAA | | 30 DAA | | 36 DAA | |
|---|---|---|---|---|---|---|
| | Area | Efficacy | Area | Efficacy | Area | Efficacy |
| Untreated control | 19 | 0,0 | 43 | 0,0 | 52 | 0,0 |
| Na₂HPO₃ | 18.8 | 1.1 | 31.0 | 27.9 | 38.0 | 26.9 |
| K₂HPO₃ | 9.2 | 51.6 | 26.4 | 38.6 | 33.0 | 26.5 |
| (NH₄)₂HPO₃ | 9.8 | 48.4 | 26.2 | 39.1 | 34.0 | 34.4 |
| Volley 88 OL | 7,4 | 61,1 | 20 | 54,0 | 24 | 53,1 |
| Volley 88 OL and Na₂HPO₃ | 5,2 | 72,6 | 10 | 76,3 | 18 | 65,4 |
| Volley 88 OL and K₂HPO₃ | 8,2 | 56,8 | 22 | 48,8 | 41 | 20,7 |
| Volley 88 OL and (NH₄)₂HPO₃ | 11,6 | 38,9 | 26 | 40,5 | 25 | 51,9 |

From these results, it is clear that disodium phosphite increases the fungal efficacy of Volley^{®} 88 OL the best.

**Example 9.** Effect of Na₂HPO₃, K₂HPO₃ and (NH₄)₂HPO₃, in combination with Dithane 60 SC (Mancozeb) against black sigatoka on banana plants.

This example demonstrates the increased antifungal effect of disodium phosphite and Dithane against black sigatoka on banana plants, when compared to other phosphite salts.

### Materials and methods

Similar to Example 8, with the following differences: Dithane 60 SC (Dow AgroSciences) at a rate of 5 liter/ha was applied instead of Volley 80 OL and only one measurement was performed at 23 days after application A (DAA).

### Results

Results are depicted in Table 9.

**Table 9. Area infected (%) and efficacy on 23 DAA for the different phosphites, Dithane and combination treatments against black sigatoka on banana plants,**

| Treatment | 23 DAA | |
|---|---|---|
| | Area | Efficacy |
| Untreated control | 19.0 | 0,0 |
| Na₂HPO₃ | 12.6 | 33.7 |
| K₂HPO₃ | 10.6 | 44.2 |
| (NH₄)₂HPO₃ | 8.0 | 57.9 |
| Dithane 60 SC | 7.0 | 63,2 |
| Dithane 60 SC and Na₂HPO₃ | 6,4 | 66,3 |
| Dithane 60 SC and K₂HPO₃ | 11.0 | 42,1 |
| Dithane 60 SC and (NH₄)₂HPO₃ | 6,8 | 64,2 |

From these results, it is clear that disodium phosphite increases the fungal efficacy of Dithane 60 SC the best.

**Example 10**. Effect of Na₂HPO_{3,} K₂HPO₃ and NH₂HPO_{3,} in combination with Dithane 60 SC (Mancozeb) against black sigatoka on banana plants

This example demonstrates the increased antifungal effect of disodium phosphite and Dithane against black sigatoka on banana plants, when compared to other phosphite salts.

### Materials and methods

Similar to Example 9, with the following differences: Treatments and measurements were applied to leaf number 3, to determine their effect as curative, and one measurement was performed at 8 days after application A (DAA).

### Results

Results are depicted in Table 10.

**Table 10. Area infected (%) and efficacy on 8 DAA for the different phosphites, Dithane and combination treatments against black sigatoka on banana plants.**

| Treatment | 8DAA | |
|---|---|---|
| | Area | Efficacy |
| Untreated control | 22.2 | 0,0 |
| Na₂HPO₃ | 15.4 | 30.6 |
| K₂HPO₃ | 12.6 | 43.2 |
| (NH₄)₂HPO₃ | 9.2 | 58.6 |
| Dithane 60 SC | 14,6 | 34,2 |
| Dithane 60 SC and Na₂HPO₃ | 10,2 | 54,1 |
| Dithane 60 SC and K₂HPO₃ | 17 | 23,4 |
| Dithane 60 SC and (NH₄)₂HPO₃ | 15,4 | 30,6 |

From these results, it is clear that disodium phosphite increases the fungal efficacy of Dithane 60 SC the best.

**Example 11**.Effect of Na₂HPO₃, K₂HPO₃ and (NH₄)₂HPO₃, in combination with Bravo against black sigatoka on banana plants.

### Materials and methods

Similar to Example 10, with the following differences: Bravo 72 SC (chlorothalonil; Syngenta) was applied at 0.875 liter/ha instead of Dithane 60 SC and the phosphites were spayed at a rate of 3 L/ha. One measurement was done at 16 DAA.

### Results

Results are depicted in Table 11.

**Table 11. Area infected (%) and efficacy on 16 DAA for the different phosphites, Bravo and combination treatments against black sigatoka on banana plants.**

| Treatment | 16DAA | |
|---|---|---|
| | Area | Efficacy |
| Untreated control | 71 | 0,0 |
| Na₂HPO₃ | 68.0 | 4.2 |
| K₂HPO₃ | 68.0 | 4.2 |
| (NH₄)₂HPO₃ | 51.0 | 28.2 |
| Bravo 72 SC | 53 | 25,4 |
| Bravo 72 SC and Na₂HPO₃ | 52 | 26,8 |
| Bravo 72 SC and K₂HPO₃ | 63 | 11,3 |
| Bravo 72 SC and (NH₄)₂HPO₃ | 55 | 22,5 |

From these results, it is clear that disodium phosphite increases the fungal efficacy of Bravo 72 SC the best.

**Example 12.** Effects of Na₂HPO₃, K₂HPO₃ and (NH₄)₂PO₃ in combination with sulfur, against powdery mildew on cucumber leaves.

This example demonstrates the increased antifungal effect of disodium phosphite and sulfur against powdery mildew on cucumber leaves, when compared to other phosphite salts.

### Materials and methods

Similar to Example 7 with the following differences: Leaf disk were taken from the dicotyledon leaves when the cucumber was around 2 weeks old. 5 disks per treatment were put on water agar in 90 mm ø petri dishes, with a total of 10 leaf disks per treatment. The formulated sulfur was tested at a concentration of 0.1 g sulfur/L. Assessment was done after 14 and 21 days after infection.

### Results

The results of these experiments are depicted in Table 12.

**Table 12. Surface area and difference in surface areas, as assessed for the different phosphites, formulated sulfur, formulated sulfur and combination treatments against powdery mildew on cucumber leaves.**

| | Day 14 | | Day 21 | |
|---|---|---|---|---|
| Treatment | Surface area (%) | Increase/decrease compared to surface area of formulated sulfur | Surface area (%) | Increase/decrease compared to surface area of formulated sulfur |
| Untreated control | 6.06 | | 10.44 | |
| Na₂HPO₃ | 9.15 | | 7.38 | |
| K₂HPO₃ | 5.18 | | 4.84 | |
| (NH₄)₂PO₃ | 7.21 | | 5.61 | |
| Formulated sulfur | 5.61 | 0 | 9.60 | 0 |
| Na₂HPO₃ and formulated sulfur | 3.92 | -30.12 | 4.41 | -54.06 |
| K₂HPO₃ and formulated sulfur | 6.77 | +20.68 | 5.57 | -41.98 |
| (NH₄)₂PO₃ and formulated sulfur | 4.49 | -19.96 | 10.63 | +10.73 |

From these results, it is clear that disodium phosphite increases the fungal efficacy of sulfur the best.

**Example 13**. Less phytotoxicity effects of disodium phosphite in combination with Revus and Dithane.

Surprising results were obtained when phytotoxicity (phytotox) was measured for individual and combination application of phosphites, Revus and Dithane Neotec. Experiments as described in Examples 5 and 6 were used to determine phytotox at 21 days after the second application.

### Results

Results are depicted in Tables 13, 14 and 15

**Table 13. Phytotox (%) of Dithane Neotec solo and in combination with phosphites**

| Treatment | Phytotox (%) |
|---|---|
| Dithane Neotec | 0 |
| Dithane Neotec and Na₂HPO₃ | 0 |
| Dithane Neotec and K₂HPO₃ | 0.8 |
| Dithane Neotec and (NH₄)₂HPO₃ | 2.5 |
| Untreated control art. Inf. | 0 |
| Untreated control not art. Inf. | 0 |

**Table 14. Phytotox (%) of Revus solo and in combination with phosphites**

| Treatment | Phytotox (%) |
|---|---|
| Revus | 0 |
| Revus and Na₂HPO₃ | 0 |
| Revus and K₂HPO₃ | 1.3 |
| Revus and (NH₄)₂HPO₃ | 2.3 |
| Untreated control art. Inf. | 0 |
| Untreated control not art. Inf. | 0 |

**Table 15. Phytotox (%) of Phosphite solo**

| Treatment | Phytotox (%) |
|---|---|
| Na₂HPO₃ | 0 |
| K₂HPO₃ | 1.8 |
| (NH₄)₂HPO₃ | 3 |
| Untreated control art. Inf. | 0 |
| Untreated control not art. Inf. | 0 |

## Claims

1. An aqueous suspension comprising sodium phosphite source at 11-80 % (w/w), a fungicide at 1-50 % (w/w), and a surfactant at 0.1-10 % (w/w), wherein the fungicide is selected from zoxamide, benalaxyl, fenamidone, dicloran, cyflufenamid, quinoxyfen, valifenalate, a conazole fungicide, azoxystrobin, captan, imazalil, penthiopyrad and pencycuron.

2. The suspension according to claim 1, wherein the sodium phosphite is disodium hydrogen phosphite.

3. The suspension according to claim 1 or claim 2, wherein the surfactant is a combination of an alkyl polysaccharide and a styrene (meth)acrylic copolymer.

4. The suspension according to any one of claims 1-3, wherein the particles have an average particle size of between 0.5 and 5 micrometer, as determined by laser diffraction analysis.

5. A method of protecting an agricultural plant or plant part against a pathogen, preferably against a fungus, comprising applying to said agricultural plant or to said plant part a diluted suspension according to any one of claims 1-4, wherein the suspension is diluted with an aqueous liquid.

6. A method of preventing, reducing and/or eliminating the presence of a pathogen, preferably a fungus, on a plant or on one or more plant parts, comprising applying to said plant or to said one or more plant parts a diluted suspension according to any one of claims 1-4, wherein the suspension is diluted with an aqueous liquid.

7. The method of any one of claims 5-6, wherein the plant part comprises seed, stem, leaf or fruit.

8. The method of any one of claims 5-7, wherein the plant part is a post-harvest fruit.

9. A method for treatment of a soil comprising
a) providing a diluted suspension according to any one of claims 1-4, wherein the suspension is diluted with an aqueous liquid; and
b) adding the diluted suspension to the soil.

10. The method of claim 9, wherein the soil is a growth substrate for mushrooms.
